# FASCICULE DE BREVET EUROPEEN

(11) **EP 2 086 818 B1**
(45) Date de publication et mention de la délivrance du brevet: **09.02.2011**
(21) Numéro de dépôt: 07847698.3
(22) Date de dépôt: 03.12.2007
(51) Int. Cl.: B62D 25/20

(54) **CAISSE DE VÉHICULE AUTOMOBILE A PLANCHER AJUSTABLE**
KRAFTFAHRZEUGAUFBAU MIT EINEM EINSTELLBAREN BODEN
MOTOR VEHICLE BODY WITH AN ADJUSTABLE FLOOR

(30) Priorité: 04.12.2006 FR 0610574
(43) Date de publication de la demande: 12.08.2009
(73) Titulaire: Renault SAS, 92100 Boulogne Billancourt (FR)
(72) Inventeur: DELORD, Christian, 93320 Pavillon Sous Bois (FR); MADELEINE, Pierre, 78180 Montigny Le Bretonneux (FR)
(86) Numéro de dépôt international: PCT/EP2007/063187
(87) Numéro de publication internationale: WO 2008/068232

(56) Documents cités:
- DE-A1- 19 807 747
- DE-A1-102004 044 054
- JP-A- 61 085 283
- JP-A- 2004 338 570

## Description

La présente invention se rapporte à une methode pour la production d'une caisse de véhicule automobile et en particulier pour ajuster un plancher et un bas de caisse.

Les vésicules automobiles comprennent usuellement un plancher bordé latéralement par un bas de caisse. Ce bas de caisse comporte un bavolet formé en général de deux profilés en U accolés en regard l'un de l'autre, l'un adapté à être orienté vers le plancher, l'autre vers l'extérieur. Le profilé en U orienté vers le plancher présente une paroi de fond à laquelle est relié le plancher. Ce dernier présente une bordure latérale repliée sensiblement perpendiculairement au plan moyen que définit le plancher, et cette bordure latérale vient s'appliquer à plat contre la paroi de fond du profilé en U orienté vers le plancher, sur laquelle elle est soudée ou rivetée. On pourra notamment se référer au document japonais, JP2004338570, lequel décrit un tel assemblage.
Selon un autre document, JP-A-61085283, qui divulgue toutes les caractéristiques du préambule de la revendication 1, le profilé en U orienté vers l'extérieur présente une aile inférieure s'étendant à l'opposé du profilé extérieur pour recevoir la bordure latérale du plancher.

Les différents types de véhicule automobile présentent des largeurs différentes, il est donc nécessaire pour les constructeurs, de prévoir parallèlement des planchers de largeur différente pour chacun des types de véhicules qu'ils fabriquent.

Or, la mise en oeuvre de différents planchers adaptés à chacun des types de véhicules est relativement coûteuse.

Aussi, un problème qui se pose et que vise à résoudre la présente invention est de fournir une methode pour la production d'une caisse de véhicule automobile commune à tout type de véhicule automobile, à tout du moins commune à tous les véhicules d'un même constructeur.

Dans le but de résoudre ce problème, la présente invention propose, une methode pour la production d'une caisse, de véhicules automobile comprenant un plancher et au moins un bas de caisse, ledit plancher comprenant au moins une bordure latérale terminée par un bord libre, ladite bordures latérale étant bordée par ledit bas de caisse, ledit bas de caisse comprenant un bavolet formant caisson, ledit bavolet comprenant un profilé externe en U et un profilé interne, ledit profilé interne présentant une première aile supérieure, une première aile inférieure opposée et une paroi de fond qui les relie, ledit profilé externe présentant une seconde aile supérieure et une seconde aile inférieure, ladite première aile inférieure présentant une bordure inférieure, ladite première aile supérieure étant adaptée à être reliée à ladite seconde aile supérieure, tandis que ladite bordure inférieure est reliée à ladite seconde aile inférieure pour refermer ledit bavolet, ledit profilé interne étant relié à ladite bordure latérale du plancher ; ladite première aile inférieure s'étend librement à partir de ladite paroi de fond et à l'opposé dudit profilé externe, et ladite bordure latérale est ajustée sur ladite première aile inférieure en formant une bande de chevauchement, selon l'invention, l'espacement entre ledit bord libre et ledit bavolet est réglé en ajustant la largeur de ladite bande de chevauchement.

Ainsi, une caractéristique de l'invention réside dans la mise en oeuvre de la première aile inférieure, sensiblement horizontalement et de la bordure latérale du plancher, qui est non plus recourbée mais qui s'étend également sensiblement horizontalement, parallèlement au plan moyen défini par te plancher et qui vient s'appliquer sur la première aile inférieure. De la sorte, la position relative du plancher et du bavolet pleut être ajustée, en faisant varier le chevauchement de la bordure latérale du plancher et de l'aile inférieure du bavolet. Cette possibilité est offerte pour les deux bordures latérales opposées du plancher et leur bavolet correspondant, de sorte que la largeur de la caisse peut être fixée en fonction du modèle de véhicule fabriqué. Bien évidemment, quelle que soit la largeur de la bande de chevauchement retenue, elle doit être suffisante pour d'une part, fixer ensemble l'aile inférieure et la bordure latérale et d'autre part, assurer la totale rigidité de l'ensemble bavolet/plancher.

Avantageusement, ladite seconde aile supérieure présente un second retour supérieur, tandis que ladite première aile supérieure présente à l'opposé, un premier retour supérieur qui s'étend alors sensiblement parallèlement audit second retour, lesdits retours supérieurs étant susceptibles d'être appliqués l'un contre l'autre et réunis ensemble pour être soudés ou collés.

Par ailleurs, et de manière préférée, ledit bavolet comprend en outre une plaque de rigidification qui s'étend entre ledit profilé externe et ledit profilé interne et qui permet précisément de rigidifier le bavolet. Avantageusement, ladite plaque de rigidification est en prise entre les ailes supérieures d'une part, et entre ladite seconde aile inférieure et ladite bordure inférieure d'autre part de manière à pouvoir être installée lorsque les deux profilés, interne et externe sont assemblés.

En outre, et selon une première variante de réalisation ladite première aile inférieure se prolonge à partir de ladite paroi de fond dans la direction dudit profilé externe, en formant un profilé en T avec cette paroi de fond, le prolongement de ladite première aile inférieure présentant ladite bordure inférieure. Par ailleurs, la première aile inférieure peut être rapportée et soudée contre le prolongement qui lui est solidaire de la paroi de fond. Préférentiellement, ledit prolongement présente un premier retour inférieur formant ladite bordure inférieure et, ladite seconde aile inférieure présente un second retour inférieur adapté à venir s'appliquer contre ladite bordure inférieure et précisément à plat contre le premier retour inférieur.

Selon une seconde variante de réalisation, ladite première aile inférieure qui s'étend à partir de la paroi de fond vers le plancher, présente en dessous, une surface inférieure opposée à ladite paroi de fond, et la bordure inférieure s'étend sur ladite surface inférieure. Par ailleurs, ladite seconde aile inférieure se prolonge avantageusement, pour venir s'appliquer précisément par dessous, contre ladite surface inférieure. De surcroît, et de façon particulièrement avantageuse, ladite plaque de rigidification présente un retour de plaque adapté à venir en prise entre le prolongement de ladite seconde aile inférieure et ladite surface inférieure.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique partielle en perspective d'un plancher central conforme à l'invention et selon une première variante de réalisation ;
- la Figure 2A est une vue schématique partielle de détail du plancher central illustré sur la Figure 1, suivant une première position ;
- la Figure 2B est une vue schématique partielle de détail du plancher central analogue à celle de la Figure 2B et ce, dans une seconde position ;
- la Figure 3 est une vue schématique partielle en coupe droite, de l'élément illustré sur les Figures 2A, 2B, complété par un autre élément ;
- la Figure 4A est une vue schématique partielle de détail d'un plancher central analogue à celle des Figures 2A, 2B, selon une seconde variante de réalisation ; et,
- la Figure 5 est une vue schématique partielle en coupe droite, de l'élément illustré sur les Figures 4A, 4B, complété par un autre élément.

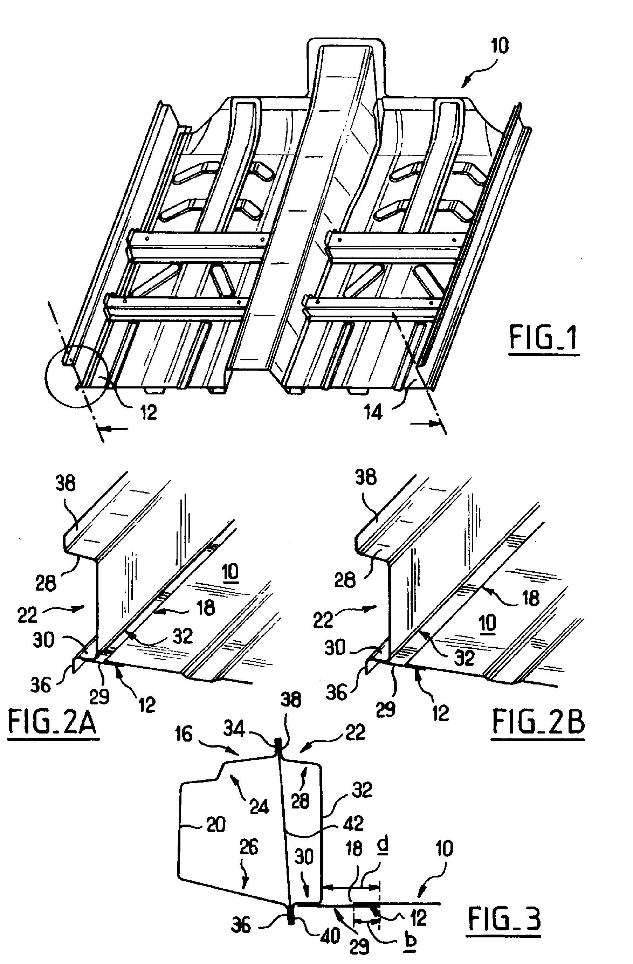

   La Figure 1 illustre un plancher central 10 d'une caisse de véhicule automobile non représentée, selon une première variante de réalisation de l'invention. Ce plancher central 10, présente deux bordures latérales 12, 14 opposées l'une de l'autre et ces bordures latérales 12, 14 vont être respectivement bordées par un bas de caisse non représenté. Le bas de caisse comporte des bavolets 16 qu'on détaillera ci-après, en référence à la Figure 3, et qui sont susceptibles d'être ajustés à distance des bordures latérales respectivement 12, 14.

On retrouve sur la Figure 3, partiellement, le plancher central 10 présentant sa bordure latérale 12 qui se termine par un bord libre 18. Le bavolet 16 comporte un profilé externe en U 20 et un profilé interne 22, le profilé interne 22 présentant une première aile supérieure 28 et une première aile inférieure 29 qui sont reliées ensemble par une paroi de fond 32, tandis que le profilé externe en U 20 présente lui, une seconde aile supérieure 24 et une seconde aile inférieure 26. En outre, la première aile inférieure 29 se prolonge à partir de ladite paroi de fond 32 vers ledit profilé externe 20 en formant une aile inférieure secondaire 30. Ainsi, la paroi de fond 32, la première aile inférieure 29 et l'aile inférieure secondaire 30, forment-elles ensemble sensiblement une partie profilée en T inversé. On reviendra ensuite, sur la première aile inférieure 29 qui s'étend librement à partir de la paroi de fond 32 et à l'opposé du profilé externe 20, et qui permet précisément d'adapter la largeur du bas de caisse pour servir à plusieurs types de véhicule.

Telle que représentée sur la Figure 3, la première aile inférieure 29 est montée soudée sur l'aile inférieure secondaire 30, qui elle forme une seule pièce avec le profilé interne 22, de sorte que cette aile inférieure secondaire 30, la paroi de fond 32 et la première aile supérieure 28 présente une forme en U.

En outre, la seconde aile supérieure 24 présente un second retour supérieur 34, tandis que la seconde aile inférieure 26 présente à l'opposé un second retour inférieur 36, et la première aile supérieure 28 présente un premier retour supérieur 38, tandis que l'aile inférieure secondaire 30 présente un premier retour inférieur 40 qui définit lui une bordure inférieure. Les profilés, externe 20 et interne 22 sont ainsi assemblés, second retour supérieur 34 contre premier retour supérieur 38, et second retour inférieur 36 contre premier retour inférieur 40, en formant un caisson qui constitue le bavolet 16. En outre, une première plaque de rigidification 42 est prise en sandwich entre les retours supérieurs 34, 38 et respectivement entre les retours inférieurs 36, 40 de manière à rigidifier le bavolet 16.

La première aile inférieure 29, s'étend sensiblement perpendiculairement à la paroi de fond 32 et horizontalement vers le plancher sur une distance d (inférieure à 10 cm, par exemple 8 cm). Elle reçoit par ailleurs en appui, la bordure latérale 12 du plancher central 10 en formant une bande de chevauchement b suffisamment large, par exemple de 4 cm, pour assurer une bonne liaison en rapport avec les contraintes que subissent le plancher central et les bas de caisse. De plus, la bordure latérale 12 est de façon avantageuse soudée par point sur la première aile inférieure 29. Bien évidemment, et de manière totalement symétrique, le bavolet latéralement opposé est identiquement relié à la bordure latérale opposée 14 du plancher central 10, et puisque le bord libre 18 est situé à 6 cm de la paroi de fond 32, il pourrait être ramené, par exemple à 1 cm de chaque côté du plancher central 10, ce qui permettrait de réduire la distance qui sépare des deux bavolet opposés.

On retrouve en perspective sur les Figures 2A, 2B, le profilé interne 22 ici non apparié avec le profilé externe, qui présente sa première aile inférieure 29 sur laquelle est montée en appui et fixée, la bordure latérale 12 du plancher central 10. Sur la Figure 2A, le bord libre 18 est dans une position rapprochée de la paroi de fond 32 du profilé interne 22, tandis que sur la Figure 2B, ce même bord libre 18 est dans une position écartée de la paroi de fond 32. Ainsi, le profilé interne 22, et ce de chaque côté du plancher central 10, de manière totalement symétrique, peut être ajusté dans une position rapprochée ou écartée du bord libre 18 de manière à adapter la largeur de la caisse du véhicule automobile.

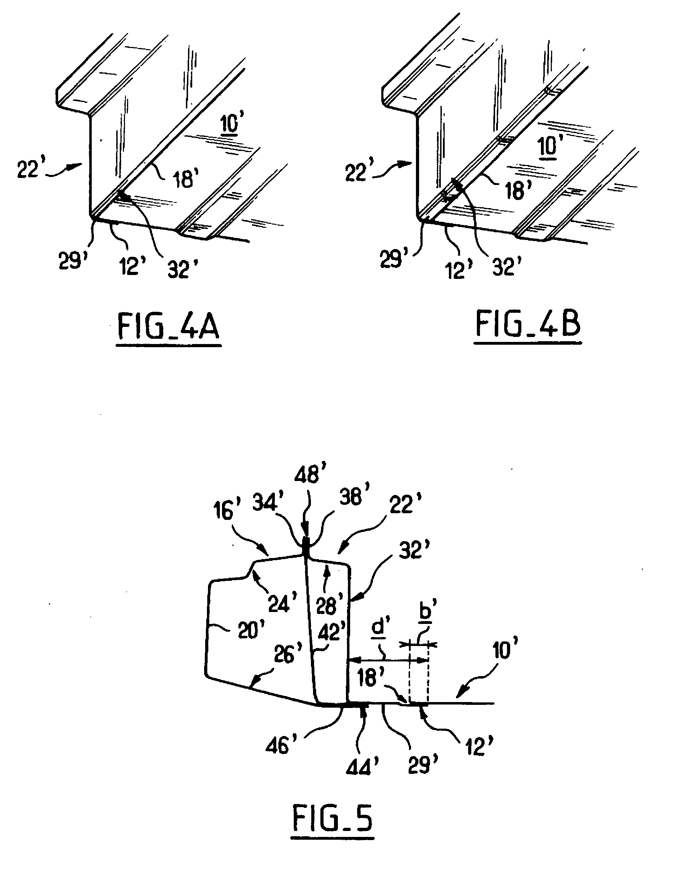

On se reportera maintenant à la Figure 5, puis aux Figures 4A, 4B, qui lui correspondent et qui illustrent une seconde variante de réalisation de l'invention. Les éléments identiques à ceux de la première variante, porteront la même référence affectée d'un signe prime : « ' ».

Ainsi, on retrouve sur la Figure 5, un plancher central 10' présentant sa bordure latérale 12' qui se termine par un bord libre 18'. Un bavolet 16' comporte un profilé externe en U 20' et un profilé interne 22', le profilé externe en U 20' présentant une seconde aile supérieure 24' et une seconde aile inférieure 26', tandis que le profilé interne 22' présente, une première aile supérieure 28' et une première aile inférieure 29' lesquelles sont reliées ensemble par une paroi de fond 32'.

Par ailleurs, la première aile inférieure 29' présente une surface inférieure 44' opposée à ladite paroi de fond 32' et qui définit une bordure inférieure située en dessous. Aussi, la seconde aile inférieure 26' se prolonge longitudinalement vers le plancher 10' pour venir s'appliquer contre la surface inférieure 44' et y être fixée, par exemple, soudée par point. De plus, une plaque de rigidification 42' profilée, présente, dans son bord inférieur, un retour de plaque 46' qui vient en prise entre l'aile inférieure 26' et la surface inférieure 44', et à l'opposé une bordure supérieure 48' qui elle vient en prise entre un second retour supérieur 34' et un premier retour supérieur 38'.

De manière analogue à la première variante de réalisation, la première aile inférieure 29' s'étend perpendiculairement à la paroi de fond 32' et horizontalement vers le plancher 10' sur une distance d' (inférieure à 10 cm, par exemple 8 cm). Elle reçoit en appui, la bordure latérale 12' du plancher central 10' en formant une bande de chevauchement b' suffisamment large pour assurer une liaison satisfaisante. De plus, la bordure latérale 12' est soudée par point sur la première aile inférieure 29'. Ainsi, le bord libre 18' est ajusté à distance de la paroi de fond 32'. Bien évidemment, là encore, le bavolet latéralement opposé est identiquement relié à la bordure latérale opposée.

On retrouve en perspective sur les Figures 4A, 4B, le profilé interne 22', qui présente sa première aile inférieure 29' sur laquelle est montée en appui et fixée, la bordure latérale 12' du plancher central 10'. Sur la Figure 4A, le bord libre 18' est dans une position rapprochée de la paroi de fond 32' du profilé interne 22', tandis que sur la Figure 4B, ce même bord libre 18' est dans une position écartée de la paroi de fond 32'. Ainsi, le profilé interne 22', et ce de chaque côté du plancher central 10', de manière totalement symétrique, peut être ajusté dans une position rapprochée ou écartée du bord libre 18' de manière à adapter la largeur de la caisse du véhicule automobile.

## Revendications

1. Méthode pour la production d'une caisse de véhicule automobile comprenant un plancher (10 ; 10') et au moins un bas de caisse, ledit plancher comprenant au moins une bordure latérale (12 ; 12') terminée par un bord libre (18 ; 18'), ladite bordure latérale étant bordée par ledit bas de caisse, ledit bas de caisse comprenant un bavolet (16 ; 16') formant caisson, ledit bavolet comprenant un profilé externe en U (20 ; 20') et un profilé interne (22 ; 22'), ledit profilé interne (22 ; 22') présentant une première aile supérieure (28 ; 28'), une première aile inférieure (29 ; 29') et une paroi de fond (32 ; 32') qui les relie, ledit profilé interne (22 ; 22') étant relié à ladite bordure latérale (12 ; 12') du plancher (10 ; 10'), ladite première aile inférieure (29 ; 29') s'étendant librement à partir de ladite paroi de fond (32 ; 32') et à l'opposé dudit profilé externe (20 ; 20'), ladite bordure latérale (12 ; 12') étant ajustée sur ladite première aile inférieure (29 ; 29') en formant une bande de chevauchement (b ; b') ;
**caractérisée en ce que** l'espacement entre ledit bord libre (18 ; 18') et ledit bavolet (16 ; 16') est réglé en ajustant la largeur de ladite bande de chevauchement (b ; b') de manière à adapter la largeur de la caisse du véhicule automobile.

2. Méthode selon la revendication 1, **caractérisée en ce que** ledit bavolet (16 ; 16') comprend en outre une plaque de rigidification (42 ; 42') qui s'étend entre ledit profilé externe (20 ; 20') et ledit profilé interne (22 ; 22').

3. Méthode selon la revendication 2, **caractérisée en ce que** ladite plaque de rigidification (42 ; 42') est en prise entre les ailes supérieures (24, 28 ; 24', 28') d'une part, et entre ladite seconde aile inférieure (26 ; 26') et une bordure inférieure (40 ; 44') de ladite première aile inférieure (29 ; 29') d'autre part.

4. Méthode selon l'une quelconque des revendications 1 à 3, **caractérisée en ce que** ladite première aile inférieure (29) se prolonge à partir de ladite paroi de fond (32) vers ledit profilé externe (20) en formant un T avec ladite paroi de fond (32).

5. Méthode selon la revendication 4, **caractérisée en ce que** ladite première aile inférieure (29) est rapportée et soudée.

6. Méthode selon la revendication 4 ou 5, **caractérisée en ce que** ledit prolongement présente un premier retour inférieur (40).

7. Méthode selon la revendication 6, **caractérisée en ce que** ladite seconde aile inférieure (26) présente un second retour inférieur (36) adapté à venir s'appliquer contre ledit premier retour (40).

8. Méthode selon l'une quelconque des revendications 3 ou 4, **caractérisée en ce que** ladite première aile inférieure (29') présente une surface inférieure (44') opposée à ladite paroi de fond (32'), et **en ce que** ladite bordure inférieure s'étend sur ladite surface inférieure.

9. Méthode selon la revendication 8, **caractérisée en ce que** ladite seconde aile inférieure (26') se prolonge pour venir s'appliquer contre ladite surface inférieure.

10. Méthode selon la revendication 4 et 8 ou 9, **caractérisée en ce que** ladite plaque de rigidification (42') présente un retour de plaque (46') adapté à venir en prise entre le prolongement de ladite seconde aile inférieure (26') et ladite surface inférieure.

## Claims

1. Method for producing a motor vehicle body comprising a floor (10; 10') and at least one body lower part, said floor comprising at least one side edge region (12; 12') ending in a free edge (18; 18'), said side edge region being bordered by said body bottom portion, said body bottom portion comprising an apron (16; 16') forming a box section, said apron comprising a U-shaped outer section piece (20; 20') and an inner section piece (22; 22'), said inner section piece (22; 22') having an upper first flange (28; 28'), a lower first flange (29; 29') and an end wall (32; 32') connecting these, said inner section piece (22; 22') being connected to said side edge region (12; 12') of the floor (10; 10'), said lower first flange (29; 29') extending freely from said end wall (32; 32') and away from said outer section piece (20; 20'), said side edge region (12; 12') being fitted onto said lower first flange (29; 29') forming an overlapping strip (b; b');
**characterized in that** the spacing between said free edge (18; 18') and said apron (16; 16') is adjusted by altering the width of said overlapping strip (b; b') so as to adapt the width of the body of the motor vehicle.

2. Method according to Claim 1, **characterized in that** said apron (16; 16') further comprises a stiffening plate (42; 42') which extends between said outer section piece (20; 20') and said inner section piece (22; 22').

3. Method according to Claim 2, **characterized in that** said stiffening plate (42; 42') is sandwiched between, on the one hand, the upper flanges (24, 28; 24', 28') and, on the other hand, between said lower second flange (26; 26') and a lower edge region (40; 44') of said lower first flange (29; 29').

4. Method according to any one of Claims 1 to 3, **characterized in that** said lower first flange (29) extends from said end wall (32) towards said outer section piece (20) making a T-shape with said end wall (32).

5. Method according to Claim 4, **characterized in that** said lower first flange (29) is added and welded on.

6. Method according to Claim 4 or 5, **characterized in that** said extension has a first lower return (40).

7. Method according to Claim 6, **characterized in that** said lower second flange (26) has a second lower return (36) designed to press against said first return (40).

8. Method according to any one of Claims 3 and 4, **characterized in that** said lower first flange (29') has a lower surface on the opposite side to said end wall (32'), and **in that** said lower edge region (44') extends over said lower surface.

9. Method according to Claim 8, **characterized in that** said lower second flange (26') is extended so that it comes to press against said lower surface.

10. Method according to Claim 4 and 8 or 9, **characterized in that** said stiffening plate (42') has a plate return (46') designed to be sandwiched between the extension of said lower second flange (26') and said lower surface.

## Patentansprüche

1. Verfahren zur Herstellung einer Kraftfahrzeugkarosserie mit einem Boden (10; 10') und mindestens einem Seitenschweller, wobei der Boden mindestens eine seitliche Randleiste (12; 12') enthält, die in einem freien Rand (18; 18') endet, wobei die seitliche Randleiste vom Seitenschweller umrandet wird, wobei der Seitenschweller eine einen Kasten bildende Schürze (16; 16') enthält, wobei die Schürze ein äußeres U-förmiges Profilteil (20; 20') und ein inneres Profilteil (22; 22') enthält, wobei das innere Profilteil (22; 22') einen ersten oberen Flügel (28; 28'), einen ersten unteren Flügel (29; 29') und eine sie verbindende Bodenwand (32; 32') aufweist, wobei das innere Profilteil (22; 22') mit der seitlichen Randleiste (12, 12') des Bodens (10; 10') verbunden ist, wobei der erste untere Flügel (29; 29') sich ausgehend von der Bodenwand (32; 32') und entgegengesetzt zum äußeren Profilteil (20; 20) frei erstreckt, wobei die seitliche Randleiste (12; 12') an den ersten unteren Flügel (29; 29') angepasst ist, indem sie einen Überlappungsstreifen (b; b') bildet; **dadurch gekennzeichnet, dass** der Abstand zwischen dem freien Rand (18; 18') und der Schürze (16; 16') geregelt wird, indem die Breite des Überlappungsstreifens (b; b') so eingestellt wird, dass die Breite der Karosserie des Kraftfahrzeugs angepasst wird.

2. Verfahren nach Anspruch 1, **dadurch gekennzeichnet, dass** die Schürze (16; 16') außerdem eine Versteifungsplatte (42; 42') enthält, die sich zwischen dem äußeren Profilteil (20; 20') und dem inneren Profilteil (22; 22') erstreckt.

3. Verfahren nach Anspruch 2, **dadurch gekennzeichnet, dass** die Versteifungsplatte (42; 42') zwischen den oberen Flügeln (24, 28; 24', 28') einerseits und zwischen dem zweiten unteren Flügel (26; 26') und einer unteren Randleiste (40; 44') des ersten unteren Flügels (29; 29') andererseits in Eingriff ist.

4. Verfahren nach einem der Ansprüche 1 bis 3, **dadurch gekennzeichnet, dass** der erste untere Flügel (29) sich ausgehend von der Bodenwand (32) zum äußeren Profilteil (20) verlängert, indem er mit der Bodenwand (32) ein T bildet.

5. Verfahren nach Anspruch 4, **dadurch gekennzeichnet, dass** der erste untere Flügel (29) angesetzt und geschweißt wird.

6. Verfahren nach Anspruch 4 oder 5, **dadurch gekennzeichnet, dass** die Verlängerung einen ersten unteren Umschlag (40) aufweist.

7. Verfahren nach Anspruch 6, **dadurch gekennzeichnet, dass** der zweite untere Flügel (26) einen zweiten unteren Umschlag (36) aufweist, der geeignet ist, um sich gegen den ersten Umschlag (40) anzulegen.

8. Verfahren nach einem der Ansprüche 3 oder 4, **dadurch gekennzeichnet, dass** der erste untere Flügel (29') eine Unterseite entgegengesetzt zur Bodenwand (32') aufweist, und dass die untere Randleiste (44') sich auf der Unterseite erstreckt.

9. Verfahren nach Anspruch 8, **dadurch gekennzeichnet, dass** der zweite untere Flügel (26') sich verlängert, um sich gegen die Unterseite anzulegen.

10. Verfahren nach Anspruch 4 und 8 oder 9, **dadurch gekennzeichnet, dass** die Versteifungsplatte (42') einen Plattenumschlag (46') aufweist, der geeignet ist, um zwischen der Verlängerung des zweiten unteren Flügels (26') und der Unterseite in Eingriff zu kommen.
